# EUROPEAN PATENT SPECIFICATION

(11) **EP 1 720 046 B1**
(45) Date of publication and mention of the grant of the patent: **12.10.2016**
(21) Application number: 05719437.5
(22) Date of filing: 23.02.2005
(51) Int. Cl.: G02B 5/08, F21V 7/22

(54) **LIGHT REFLECTOR AND LIGHTING FIXTURE INCLUDING THE SAME**
LICHTREFLEKTOR UND BELEUCHTUNGSVORRICHTUNG DAMIT
RÉFLECTEUR DE LUMIÈRE ET SYSTÈME D'ÉCLAIRAGE ENGLOBANT LEDIT RÉFLECTEUR

(30) Priority: 24.02.2004 JP 2004048660
(43) Date of publication of application: 08.11.2006
(73) Proprietor: Panasonic Intellectual Property Management Co., Ltd., Osaka 540-6207 (JP)
(72) Inventor: WATANABE, Kazuki, Osaka 5718686 (JP); NOGUCHI, Shinji, Osaka 5718686 (JP); YAMAUCHI, Satoru, Osaka 5718686 (JP)
(74) Representative: Mackenzie, Andrew Bryan
(86) International application number: PCT/JP2005/002929
(87) International publication number: WO 2005/081021

(56) References cited:
- WO-A1-99/38036
- JP-A- 10 287 846
- JP-A- 2000 212 484
- JP-A- 2000 340 015
- JP-A- 2001 060 316
- JP-A- 2001 081 403
- JP-A- 2001 208 904
- JP-A- 2001 270 044
- JP-A- 2002 006 123
- JP-A- 2002 348 534
- US-A- 4 358 507
- US-A1- 2002 064 664
- US-A1- 2002 154 407
- US-A1- 2003 169 506
- US-A1- 2003 180 177

## Description

### TECHNICAL FIELD

The present invention relates to a light reflector for reflecting light emitted from a light source, and a lighting fixture for controlling the light in an optional distribution using the light reflector, and particularly to a light reflector which is used as a home/store lighting fixture such as a downlight or a spotlight, or as an outdoor lighting fixture such as a street lamp or a projector, and to a lighting fixture having the light reflector.

### BACKGROUND ART

The basic role of a light reflector in lighting equipment is to reflect light emitted from a light source so as to change the direction of the light, and control light distribution to an optional irradiation area. Because of the requirement to increase uniformity of illumination over an entire space, a white coated light reflector having high diffusibility is generally used e.g. for a home ceiling light and an office base light. On the other hand, in order to meet the requirement to irradiate a certain area with high efficiency as e.g. in a store and an outdoor sports facility, an often used light reflector is made by molding a substrate e.g. of metal, glass or plastics into a shape designed for light distribution, and by forming thereon a metal coating as a light reflecting layer such as Al or Ag which has a high reflectance.

Such light reflector has a general structure comprised of a substrate, an undercoat layer, a light reflecting layer and a top coat layer. The undercoat layer is formed on the surface of the substrate for the purpose of improving the smoothness of the surface of the substrate, and improving the adhesion between the substrate and the metal coating as the light reflecting layer. Note that the undercoat layer can be omitted if the substrate is smooth to an extent that does not cause a practical problem, and if the adhesion between the substrate and the light reflecting layer can be sufficiently ensured. The top coat layer is formed for the purpose of protecting the metal coating as the light reflecting layer from water, salt, other corrosive gases or ultraviolet light or from being scarred by an external force.

As described above, generally the light reflecting layer is formed using a metal such as Al or Ag, and mainly by physical vapor deposition (hereafter PVD) such as vacuum deposition, ion plating, ion beam assisted deposition, plasma assisted deposition or magnetron sputtering. Among practically used metallic materials, Ag is a metal having the highest reflectance, so that the use of Ag for the light reflecting layer is one of effective means to increase the efficiency of lighting fixtures.

However, Ag is a very active metal, and likely to tarnish by reaction with sulfur dioxide gas, salt, water or the like, and is more likely to tarnish due to the occurrence of migration by receiving light and thermal energy from a light source, so that it has been difficult to use Ag for a light reflector of a lighting fixture.

After a series of research studies to use Ag for a light reflector of a lighting fixture, the inventors have devised surface treatment applicable to a downlight using, as its light source, a compact fluorescent lamp or one of some HID lamps with low operating temperature, as described in Matsushita Electric Works Technical Report No.47 (1994) pp.28-31, and Matsushita Electric Works Technical Report No.68 (1999) pp.19-25. This is currently put to practical use using, as a top coat layer, an acryl-based paint which has high light resistance and which is partially modified by a silicone resin or an amino resin, and using, as an undercoat layer, an epoxy-based paint or an acryl-based paint which has high adhesion to a substrate.

However, the prior art has the following problem. As described above, Ag or an Ag-based alloy is likely to tarnish to brown or purple by a small amount of sulfur dioxide gas, hydrogen sulfide, ozone or the like present in the atmosphere. Further, when water or salt deposits on a surface of the light reflecting layer, it is likely that Ag atoms electrically migrate to cause white spots called aggregation.

Thus, the top coat layer is formed for the purpose of secluding Ag forming the light reflecting layer from the outside environment causing the tarnish and corrosion of Ag. The prior art has used an organic coating using, as a base, an acryl paint which has good light resistance, and which is partially modified by an amino resin or a silicone resin (refer to e.g. Japanese Laid-open Patent Publication 2000-340015).

### DISCLOSURE OF INVENTION

However, the organic coating has had a problem that a gap is formed between the top coat layer and the light reflecting layer, because radicals generated by light and heat stress propagate and at the same time break the main chain bonds of the resin forming the organic coating. This in turn leads to a problem that sulfur dioxide gas, hydrogen sulfide, ozone or the like runs along the gap and contacts the light reflecting layer, thereby tarnishing Ag.

The present invention is to solve the above problems, and it is an object of the present invention to provide a light reflector with good light resistance and high efficiency without the possibility of tarnish and corrosion even in a high output lamp, and to provide a lighting fixture having the light reflector.

To achieve the above-described object, the light reflector according to the present invention is a light reflector as recited in claim 1. The light reflector comprising: a substrate; a light reflecting layer formed of an Ag-based alloy and formed on a surface of the substrate; and a top coat layer formed to cover a surface of the light reflecting layer, wherein the top coat layer is formed by coating a straight silicone-based coating agent on the surface of the light reflecting layer, and an undercoat layer coated on the surface of the substrate.

Such structure makes it possible to improve the heat resistance, light resistance and corrosion resistance of the light reflector while maintaining the high reflectance of the light reflecting layer formed of an Ag-based alloy, because the straight silicone-based coating agent forming the top coat layer has little content of organic material and barely generates radicals, and furthermore has a skeleton formed of Si-O which has a high bonding energy.

Preferably, the top coat layer is a coating having 0.1 to 10 weight parts of a Ni compound-based cure accelerating agent added to 100 weight parts of a straight silicone base resin.

Preferably, a top surface of the top coat layer is a layer containing titanium dioxide having a photocatalytic function.

Also preferably, an undercoat layer is formed between the substrate and the light reflecting layer, wherein the undercoat layer is an organic coating containing fine inorganic particles in an amount of 10 to 70 wt% based on solid content of the coating.

Also preferably, an undercoat layer is formed between the substrate and the light reflecting layer, wherein the undercoat layer is an organic coating having 1 to 5 weight parts of an elasticity reducing agent added to 100 weight parts of a base resin.

Preferably, the light reflector has, between the top coat layer and the light reflecting layer, an intermediate layer formed of a composite oxide of Mg and Al.

Also preferably, an undercoat layer is formed between the substrate and the light reflecting layer, wherein the undercoat layer is a coating having at least 0.1 weight part of a Sn compound-based cure accelerating agent or a Ni compound-based cure accelerating agent added to 100 weight parts of a polyester-modified silicone-based coating agent or an epoxy-modified silicone-based coating agent.

Also preferably, an undercoat layer is formed between the substrate and the light reflecting layer, wherein the undercoat layer is a coating having at least 5 to 20 weight parts of an acryl-modified silicone-based coating agent added to 100 weight parts of a polyester-modified silicone-based coating agent or an epoxy-modified silicone-based coating agent.

Also preferably, the top coat layer is formed of the straight silicone-based coating agent having added thereto mica pigments coated with titanium dioxide, in which the added amount of the mica pigments is 5 to 20 weight parts to 100 weight parts of a straight silicone base resin.

Also preferably, an undercoat layer is formed between the substrate and the light reflecting layer, wherein the undercoat layer is a coating having 0.2 to 1.0 weight part of a polydimethylsiloxane(PDMS)-based leveling agent added to 100 weight parts of a polyester-modified silicone-based coating agent or an epoxy-modified silicone-based coating agent.

Also preferably, the top coat layer is a coating having 5 to 20 weight parts of a melamine resin added to 100 weight parts of a straight silicone base resin.

Also preferably, the top coat layer is a coating having 2 to 10 weight parts of silica (SiO₂), with a siloxane compound coated on the surface thereof, added to 100 weight parts of a straight silicone base resin.

To achieve the above-described object, the lighting fixture according to the present invention is a lighting fixture having the light reflector and a light source unit.

### BRIEF DESCRIPTION OF DRAWINGS

FIG. 1 is a cross-sectional view of a light reflector according to an embodiment of the present invention;
FIG. 2 is a cross-sectional view of a light reflector according to another embodiment of the present invention;
FIG 3 is a cross-sectional view of a light reflector according to another embodiment of the present invention;
FIG. 4 is a cross-sectional view of a light reflector according to another embodiment of the present invention;
FIG. 5 is a cross-sectional view of a light reflector according to another embodiment of the present invention;
FIG. 6 is a cross-sectional view of a light reflector according to another embodiment of the present invention; and
FIG. 7 is a cross-sectional view of a light reflector according to another embodiment of the present invention.

### BEST MODE FOR CARRAYING OUT THE INVENTION

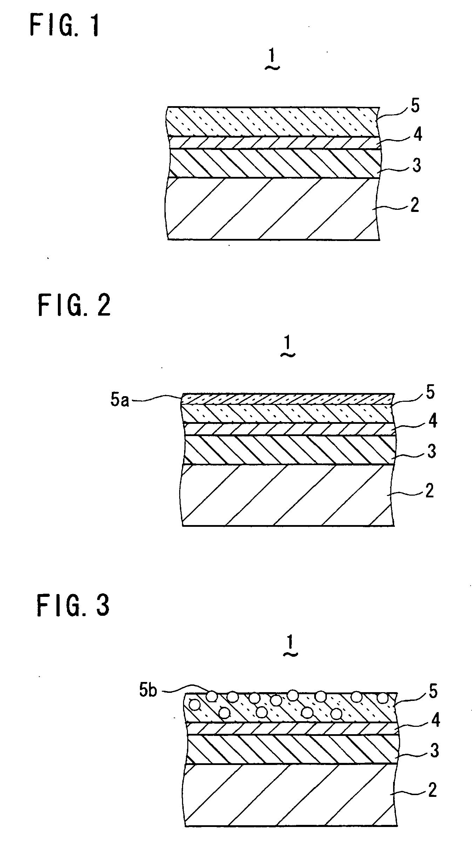

Hereinafter, embodiments of the present invention will be described in detail with reference to FIG. 1 to FIG. 7. A light reflector 1 comprises: a substrate 2; a light reflecting layer 4 formed of Ag or an Ag-based alloy, either directly on the substrate 2 or via an intermediate layer called undercoat layer 3; and a top coat layer 5 formed on the light reflecting layer 4.

An example of a method of forming the light reflecting layer 4, to be mentioned, is physical vapor deposition (PVD) such as vacuum deposition, magnetron sputtering, ion plating, ion beam assisted deposition or plasma assisted deposition. Among them, vacuum deposition or magnetron sputtering is particularly preferable.

The substrate 2 is not limited as long as it is usable at a heat resistant temperature which the light reflector 1 is required to have. However, for using a resin for the substrate, typical examples of thermoplastic resins to be mentioned are polybutylene terephthalate (PBT), polyethylene terephthalate (PET), polyphenylene sulfide (PPS), polyphenylene oxide (PPO), thermoplastic polyimide (PI), polyetherimide (PEI), polycarbonate (PC), liquid crystal polymer (LCP), syndiotactic polystyrene (SPS), and so on. Further, examples of thermosetting resins to be mentioned are unsaturated polyester (UP), which is generally used as a bulk molding compound (BMC) material, and so on. Various additives such as inorganic fillers can be added to any of them for the purpose of e.g. heat resistance, strength and light resistance. For a similar purpose, it is possible to combine multiple thermoplastic resins into a polymer blend, or into a block copolymer using a cosolvent. Besides, a molding process is not limited as long as the molding process is one generally used for resin molding, and its examples are injection molding, compression molding, vacuum forming, pressure forming, and so on.

For using a metal for the substrate 2, generally an Ag-based alloy, a Mg-based alloy, a Fe-based alloy or the like is used, while a molding process such as spinning, pressing, die casting or thixomolding is selected, considering the material, shape of the required light reflector 1, and so on. For using a glass for the substrate 2, pressing or blowing is typical. If the surface of the substrate 2, after molding, has deposited thereon machine oil, mold release agent or gas at the time of molding, it is of course possible to remove it by a physical or chemical process.

A straight silicone-based coating agent, which does not generate a large amount of radicals when receiving heat and light stress from a lamp, is used for the top coat layer 5 which is formed on the light reflecting layer 4. Silicone-based coating agents are broadly divided into those having, as a main ingredient, a straight silicone resin composed only of a silicone material, and those having, as a main ingredient, an organically modified silicone resin obtained by copolymerizing a silicone material and an organic resin. The former coating agents having, as a main ingredient, a straight silicone resin are preferable for the top coat layer 5, because they have little content of organic material and barely generate radicals, and have a skeleton formed of Si-O having a high bonding energy to be hardly broken.

It is also an effective means to add a cure accelerating agent comprising a Ni compound (hereafter referred to as Ni compound-based cure accelerating agent) to a straight silicone-based coating agent. Examples of the Ni compound-based cure accelerating agents to be generally mentioned are octylates, naphthenates, and the like. The addition of a Ni compound-based cure accelerating agent makes it possible to increase the crosslink density of the coating, and thus to enhance the gas barrier property. It also leads to an advantage of lowering the curing temperature and reducing the curing time when manufacturing the light reflector 1. The amount of the addition is preferably such that an addition of 0.1 to 10 weight parts is made to 100 weight parts of a straight silicone base resin. This is because below this range, the desired effect of increasing the crosslink density cannot be obtained, while above this range, the crosslink density is too high, causing the top coat layer 5 to be fragile, which produces cracks due to thermal shock cycles e.g. caused by the turning on and off of a lamp.

Furthermore, as shown in FIG. 2 and FIG. 3, it is also effective to form, on a top surface of the top coat layer 5, a layer containing a photocatalyst such as anatase type titanium oxide. A forming method can be such that an inorganic coating is formed e.g. by coating a straight silicone-based coating agent on a surface of the light reflecting layer 4, and thereafter an anatase type titanium oxide layer 5a is formed e.g. using a sol-gel process (refer to FIG. 2). Another method is such that anatase type titanium oxide particles 5b are mixed in the coat the top coat layer 5 to be coated, so as to be exposed on the top surface (refer to FIG. 3). Anatase type titanium oxide exerts a photocatalytic effect by being irradiated with ultraviolet light emitted from a lamp, and has an effect of decomposing gas component which tarnishes an Ag coating, thereby preventing the tarnishing. At the same time, it has an effect of absorbing ultraviolet light, so that it can also suppress generation of radicals.

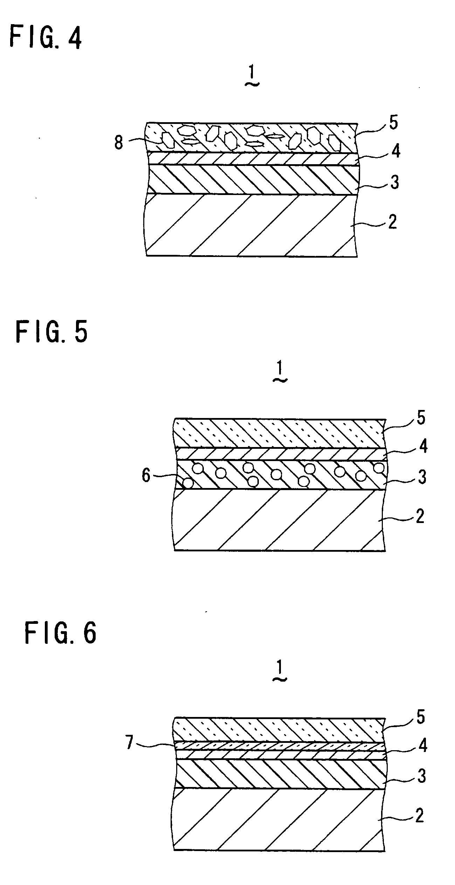

In the prior art of home downlights, in some cases, a coloring component may be added to the top coat layer 5 so that the superior light reflectivity of Ag or Ag-based alloy used for the light reflecting layer 4 is effectively utilized when the light is on, while at the same time the appearance of the light reflector 1 is harmonized with the ceiling material when the light is off. If a coloring component is added to a material having a low curing temperature, organic pigments and the like having high heat resistance are selected. However, if added to a straight silicone-based coating agent having a high curing temperature as in the present invention, the organic pigments cause tarnishing and the like, exceeding the heat resistance limit, so that the desired coloring effect cannot be obtained. Thus, according to the present invention, it is effective to add mica pigments coated with titanium dioxide (hereafter referred to as pearl mica pigments) 8 to the top coat layer 5 as shown in FIG. 4.

Due to the interference effect of the titanium dioxide coated on the surface, the pearl mica pigments 8 allow selected wavelength components of visible light to selectively pass through, and reflect other wavelength components, thereby enabling coloring in an optional reflection color. In the case of home downlights, in particular, the light reflector 1 is preferred to be colored in pale yellow, so that it is preferable to add pearl mica pigments whose reflected light is yellow.

The added amount of pearl mica pigments 8 is preferably 5 to 20 weight parts to 100 weight parts of a straight silicone base resin. Below this range, the desired coloring effect cannot be obtained, while above this range, the reflectance of the light reflector 1 decreases, making it impossible to obtain the effect of using Ag or Ag-based alloy for the light reflecting layer 4.

Thus, the addition of mica pigments coated with titanium dioxide, which has high heat resistance, to a straight silicone-based coating agent forming the top coat layer 5 makes it possible to prevent tarnishing of the coloring component due to heat when baking the top coat layer 5 or using the light reflector 1, thereby improving design performance.

In store downlights, in some cases, a matting agent may be added to the top coat layer 5 so that the superior light reflectivity of Ag or an Ag-based alloy used for the light reflecting layer 4 is effectively utilized when the light is on, while at the same time the appearance of the light reflector 1 is harmonized with the ceiling material when the light is off. It is effective to add silica with a siloxane compound coated on the surface thereof to the top coat layer 5 formed of a straight silicone-based coating agent disclosed in the present invention.

The silica with a siloxane compound coated on the surface thereof shows good dispersibility in the straight silicone-based coating agent. However, silica without surface coating is not uniformly dispersed in the straight silicone-based coating agent, and mutual aggregation of silica is observed, damaging the appearance of the light reflector 1.

Thus, the formation of the top coat layer 5 by adding silica with a siloxane compound coated on the surface thereof to the straight silicone-based coating agent improves design performance without impairing the superior reflection characteristics of the light reflector 1, and also improves spatial luminance due to the increase of the light diffusing component.

The added amount of silica with the siloxane compound coated on the surface thereof is preferably 2 to 10 weight parts to 100 weight parts of the straight silicone base resin. Below this range, a desired design effect cannot be obtained, while above this range, the reflectance of the light reflector 1 decreases, making it impossible to obtain the effect of using Ag or Ag-based alloy for the light reflecting layer 4.

Besides, for uniformly and smoothly coating the straight silicone-based coating agent on the light reflecting layer 4 formed of Ag or Ag-based alloy into a coating, it is an effective means to add a melamine resin thereto. Such addition of the melamine resin to the straight silicone-based coating agent to form the top coat layer 5 improves the wettability on the light reflecting layer 4 at the time of coating, making it possible to eliminate appearance defects, particularly repellency defects, when manufacturing the light reflector 1, and to improve the corrosion resistance.

The added amount of melamine resin is preferably 5 to 20 weight parts to 100 weight parts of the straight silicone base resin. Below this range, the repellency defects cannot be reduced as desired, while above this range, the adhesion, corrosion resistance and heat resistance decrease.

For the undercoat layer 3, a paint is used such as an acryl-based or epoxy-based paint, a modified silicone-based paint, or the like. Among them, if the light reflector 1 requires a continuous heat resistance temperature of 140°C or higher, an epoxy-modified silicone-based coating is preferable because of its superiority in heat resistance and adhesion to the substrate 2 and Ag. The use of an epoxy-modified silicone-based coating to form the undercoat layer 3 makes it possible to improve the heat resistance of the light reflector 1 and the adhesion between the substrate 2 and the light reflecting layer 4. On the other hand, a straight silicone-based coating, though superior in heat resistance, is unsuitable for the undercoat layer 3 because its adhesion to Ag decreases after baking of the top coat layer 5.

It is also possible to use, for the undercoat layer 3, an organic coating agent having superior heat resistance and adhesion. Note, however, that if an inorganic coating agent is used for the top coat layer 5, cracks may occur or shrinkage crimp may be formed in the top coat layer 5 as unable to withstand the internal stress due to expansion and shrinkage of the undercoat layer 3, because the coefficient of thermal expansion of an organic coating is higher than the coefficient of thermal expansion of an inorganic coating. In this case, as shown in FIG 5, it becomes possible to use an organic coating agent if the undercoat layer 3 has fine inorganic particles 6 (hereafter referred to as inorganic fine particles) added thereto to have a reduced expansion coefficient, or has an elasticity reducing agent added thereto to have a reduced elasticity.

The material, shape and particle size of the inorganic fine particles 6 to be added are selected from those which do not impair the function of the undercoat layer 3. Relatively inexpensive materials such as SiO₂, Al₂O₃, talc, kaolin and the like with spherical shape are preferable. The particle size range is preferably from 0.1 to 10 µm, and more preferably from 0.1 to 3 µm. If the particle size is above the above-described range, the inorganic fine particles 6 are exposed on the surface of the undercoat layer 3, while if the particle size is below this range, secondary aggregation of the inorganic fine particles 6 occurs in the undercoat layer 3. As a result, they are exposed on the surface similarly as in the case of adding large particles, thereby impairing the adhesion of the light reflecting layer 4. The added amount is preferably from 10 to 70 wt% to be added based on solid content of the coating in order to make the coefficient of thermal expansion of the organic coating closer to the coefficient of thermal expansion of the inorganic coating. If the added amount is larger than this range, the inorganic fine particles 6 are exposed on the surface of the undercoat layer 3, impairing the adhesion. If the added amount is smaller than this range, the purported effect of reducing the coefficient of thermal expansion cannot be obtained.

The addition of the inorganic fine particles 6 to the undercoat layer 3, which is an organic coating, to reduce the expansion coefficient makes it possible to reduce the difference in the coefficient of thermal expansion between the undercoat layer and the top coat layer 5 which is an inorganic coating, so as to prevent the occurrence of cracks in the top coat layer 5 due to thermal shock cycles e.g. caused by the turning on and off of a lamp.

On the other hand, if an elasticity reducing agent is added to the undercoat layer 3, the elasticity reducing agent is selected depending on the base resin of the undercoat layer 3. The addition of the elasticity reducing agent makes it possible to partially block crosslinking of the base resin, allowing the coating to have flexibility, so as to reduce the internal stress due to the thermal expansion. If an epoxy resin, for example, is used for the undercoat layer 3, the elasticity reducing agent to be used is a fatty acid-modified epoxy resin, or propylene glycol having a terminal modified with epoxy, or the like. The added amount of the elasticity reducing agent is preferably from 1 to 5 weight parts to 100 weight parts of the base resin. If the added amount exceeds this range, the heat resistance of the undercoat layer 3 abruptly decreases. If the added amount is smaller than this range, the purported effect of reducing the coefficient of thermal expansion cannot be obtained.

Thus, the addition of the elasticity reducing agent to the undercoat layer 3, which is an organic coating, to reduce the elasticity makes it possible to prevent the occurrence of cracks in the top coat layer 5 due to thermal shock cycles e.g. caused by the turning on and off of a lamp.

The undercoat layer 3 is preferably cured at a high temperature of 200°C or higher to obtain sufficient heat resistance to thermal energy emitted from an HID lamp, a halogen lamp or the like. Note, however, that if plastics is used for the substrate 2, it is necessary to cure it at a temperature lower than 200°C so as to avoid thermal deformation of the substrate 2.

At such time, it is also an effective means to add a cure accelerating agent such as a Sn compound-based or Ni compound-based cure accelerating agent. Examples of the Sn compound-based cure accelerating agents to be generally mentioned are dibutyltin laurate, and the like. Examples of the Ni compound-based cure accelerating agents to be mentioned are octylates, naphthenates, and the like as described above. The addition of these cure accelerating agents makes it possible to obtain sufficient coating properties even by a curing process at a low temperature lower than 200°C. The amount of the addition is preferably such that an addition of at least 0.1 weight part or more of selected one of the Sn compound-based curing agents or Ni compound-based cure accelerating agents is made to 100 weight parts of the base resin of the undercoat layer 3. The amount of the addition of 0.5 weight part or more is more preferable to obtain sufficient performance by curing at a low temperature of 190°C or lower.

Thus, the addition of a Sn compound-based cure accelerating agent or a Ni compound-based cure accelerating agent to the undercoat layer 3, which is an organic coating, makes it possible to lower the curing temperature of the undercoat layer 3, achieving size reduction and speed-up of manufacturing equipment.

In order to cure the undercoat layer 3 at a low temperature, it is also an effective means to add an acryl-modified silicone-based coating agent. The acryl-modified silicone, as a single material, is inferior in material properties such as heat resistance and adhesion with the substrate 2 or the light reflecting layer 4, so that it is not suitable as a material to form the undercoat layer 3. However, it has sufficient coating hardness although the curing temperature is relatively low, so that its addition in a small amount to an epoxy-modified silicone makes it possible to lower the coating curing temperature while maintaining the heat resistance and adhesion. The amount of the addition is preferably such that an addition of 5 to 20 weight parts of the acryl-modified silicone-based coating agent is made to 100 weight parts of the base resin of the undercoat layer 3. If the added amount is below this range, a sufficient effect of lowering the curing temperature cannot be obtained, while if it is above this range, opacity occurs when the light reflecting layer 4 is formed, so that the light reflector 1 as desired cannot be obtained.

Thus, the addition of the acryl-modified silicone-based coating agent having low curing temperature and high hardness to the undercoat layer 3, which is an organic coating, also makes it possible to lower the baking temperature of the undercoat layer 3, achieving size reduction and speed-up of manufacturing equipment.

Besides, for uniformly and smoothly coating the epoxy-modified silicone-based coating agent on a surface of the substrate 2 to form the undercoat layer 3, it is an effective means to add a polydimethylsiloxane-based leveling agent. The addition of the polydimethylsiloxane-based leveling agent to the epoxy-modified silicone-based coating agent to form the undercoat layer 3 improves the wettability on the substrate 2 at the time of coating, making it possible to eliminate appearance defects, particularly repellency defects, when manufacturing the light reflector 1. The reduction of the repellency defects makes it possible to reduce peeling and corrosion of the light reflecting layer 4 which start from repellent portions, and which have conventionally been observed during corrosion resistance test

The added amount of the leveling agent is preferably 0.2 to 1.0 weight part to 100 weight parts of the base resin of the undercoat layer 3. Below this range, the repellency defects cannot be reduced as desired, while above this range, the adhesion and corrosion resistance decrease.

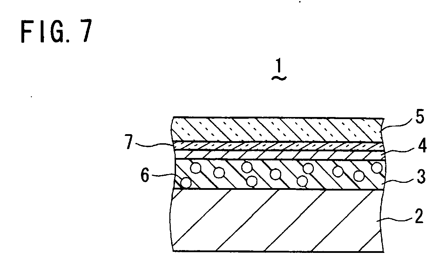

In the case of e.g. a high watt HID lamp, which has a high intensity of irradiated light and an operating temperature reaching as high as 200°C, it is possible to interpose an intermediate layer 7 between the top coat layer 5 and the light reflecting layer 4 as shown in FIG 6 and FIG. 7. The intermediate layer 7 has effects of preventing gas capable of tarnishing Ag as described above from reaching the light reflecting layer 4, and also preventing Ag atoms from migrating by light and heat, and further improving the adhesion of the top coat layer 5. The intermediate layer 7 is formed of a composite oxide of Mg and Al. A forming process is not particularly limited, and its examples to be mentioned are: forming MgAl₂O₄ by PVD such as vacuum deposition, ion plating, ion beam assisted deposition, plasma assisted deposition or sputtering; forming MgO and Al₂O₃ at the same time by PVD; forming metal state Mg and Al into a coating by PVD, and oxidizing it by oxygen plasma; and so on.

By using an Ag-based alloy coating of Ag containing 0.1 to 1 atomic% of Nd or Y and 0.1 to 2 atomic% of Au or Cu to form the light reflecting layer 4, it is possible to further improve the light resistance, heat resistance and corrosion resistance. This is because the addition of a small amount of Nd or Y having a large ionic radius into the crystal lattice of Ag can prevent the phenomenon of migration of Ag atoms by heat and light, while the addition of Au or Cu, which is a noble metal element, can prevent the phenomenon of the aggregation due to water or salt. If the added amount of the added element is above the above-described range, the yellow component of the light reflecting layer 4 increases, so that the light reflector 1 appears yellow, damaging the appearance and reducing the reflectance. Below the above-described range, purported light resistance, heat resistance and corrosion resistance cannot be obtained. Thus, the above-described range is preferable.

The lighting fixture of the present invention has the above-described light reflector 1 and a light source unit such as a HID lamp, and can be used e.g. as a home/store lighting fixture such as a downlight or a spotlight, or as an outdoor lighting fixture such as a street lamp or a projector.

The following describes examples embodying the above-described embodiments and comparative examples which do not embody the present invention. The following Example 1 to Example 3, Example 8 to Example 10 and Example 12 to Example 14 are based on the structure shown in FIG. 1, while Example 4 is based on the structure shown in FIG. 2. Example 5 and Example 7 are based on the structure shown in FIG. 6, while Example 6 and Example 11 are based on the structure shown in FIG. 4. Table 1 to Table 4 show respective structures of Example 1 to Example 14 and Comparative Example 1 to Comparative Example 5.

Examples 1 and 5-7 represent embodiments of the present invention, whereas Examples 2-4 and 8-14 do not embody the present invention.

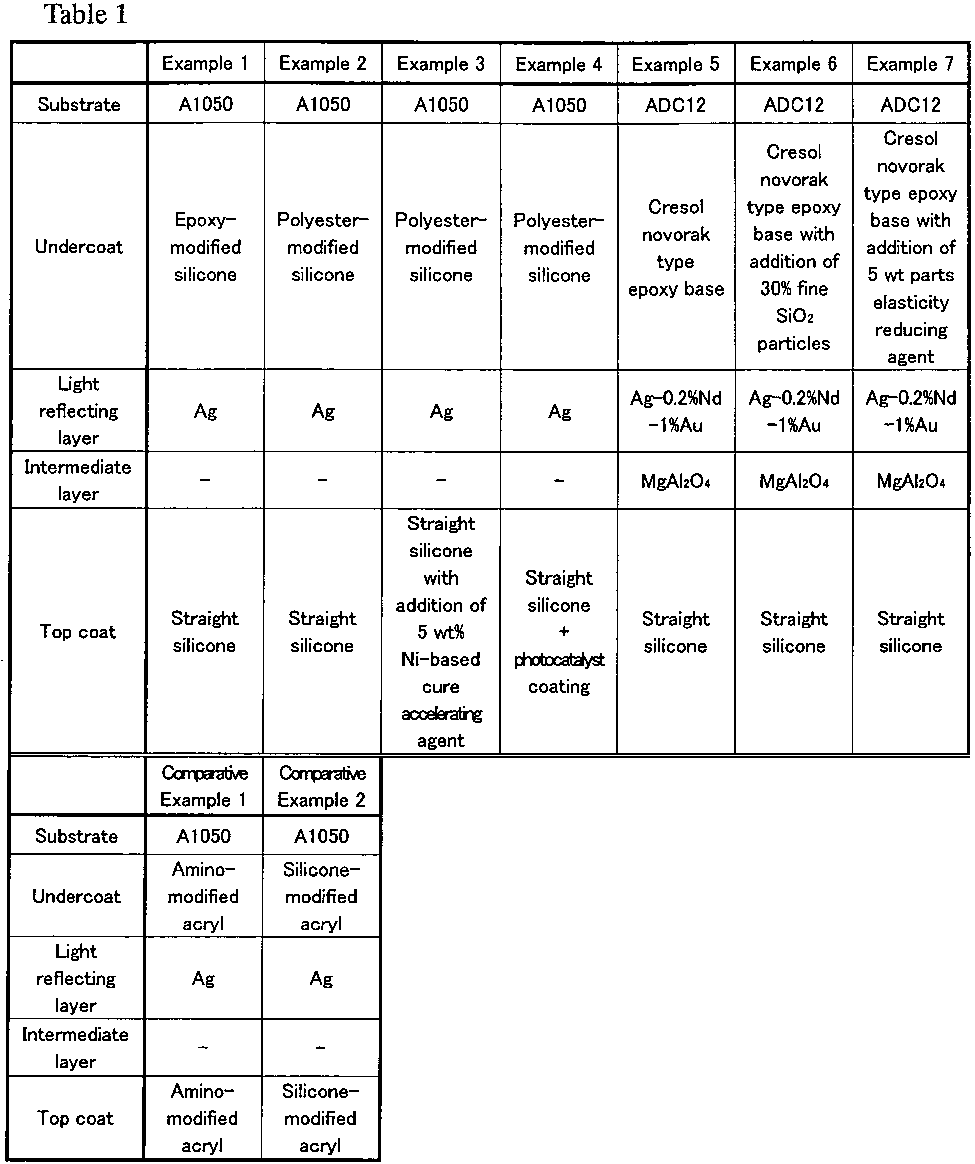

**Table 2**

| | Example 8 | Example 9 | Example 10 | Example 11 |
|---|---|---|---|---|
| Substrate | A1050 | A1050 | A1050 | A1050 |
| Undercoat | Polyester-modified silicone with addition of 0.5 wt part Ni-based cure accelerating agent | Polyester-modified silicone with addition of 0.5 wt part Sn-based cure accelerating agent | Polyester-modified silicone with addition of 10 wt parts acryl-modified silicone | Polyester modified silicone |
| Light reflecting layer | Ag | Ag | Ag | Ag |
| Intermediate layer | - | - | - | - |
| Top coat | Straight silicone | Straight silicone | Straight silicone | Straight silicone with addition of 5 wt parts pearl mica pigments |

**Table 3**

| | Example 12 | Example 13 | Example 14 |
|---|---|---|---|
| Substrate | A1050 | A1050 | A1050 |
| Undercoat | Polyester-modified silicone with addition of 1.0 wt part polydimethylsiloxane -based leveling agent | Polyester-modified silicone | Polyester-modified silicone |
| Light reflecting layer | Ag | Ag | Ag |
| Intermediate layer | - | - | - |
| Top coat | Straight silicone | Straight silicone with addition of 5.0 wt parts melamine resin | Straight silicone with addition of 10 wt parts silica having siloxane compound coating |

**Table 4**

| | Comparative Example 3 | Comparative Example 4 | Comparative Example 5 |
|---|---|---|---|
| Substrate | A1050 | A1050 | A1050 |
| Undercoat | Polyester-modified silicone with addition of 1.5 wt parts polydimethylsiloxane -based leveling agent | Polyester-modified silicone | Polyester-modified silicone |
| Light reflecting layer | Ag | Ag | Ag |
| Intermediate layer | - | - | - |
| Top coat | Straight silicone | Straight silicone with addition of 25 wt parts melamine resin | Straight silicone with addition of 15 wt parts silica having siloxane compound coating |

### Example 1

A substrate having the shape of a light reflector processed from an Al material (A1050) by spin forming was delipidated and washed using an alkaline detergent. Thereafter, it was spray-coated with an epoxy-modified silicone-based paint (epoxy-modified silicone-based coating agent). After baked and dried at 220°C for 60 minutes, it was subjected to DC magnetron sputtering of Ag (purity of 99.99%) in an Ar gas atmosphere to form a light reflecting layer with an average coating thickness of 120 nm. By thereafter coating it with a straight silicone-based paint (straight silicone-based coating agent) as a top coat layer, and baking and drying at 180°C × 30 minutes, a light reflector was obtained.

### Example 2

Fabrication was done in a similar manner as in Example 1, except that a polyester-modified silicone-based paint (polyester-modified silicone-based coating agent) was used for the undercoat layer, whereby a light reflector was obtained.

### Example 3

Fabrication was done in a similar manner as in Example 2, except that a Ni-based cure accelerating agent was added to the top coat layer in an amount of 5 wt% based on a base resin, whereby a light reflector was obtained.

### Example 4

After fabrication was done in a similar manner as in Example 2, a light reflector was obtained by further coating a photocatalyst inorganic coating containing anatase type titanium oxide, and by baking and drying at 120°C × 60 minutes.

### Example 5

A substrate having the shape of a reflector plate molded and processed from an Al alloy (ADC12) by die casting was delipidated and washed using an alkaline detergent. Thereafter, it was spray-coated with a cresol novorak type epoxy-based paint, and baked and dried at 200°C × 60 minutes. Thereafter, it was subjected to DC magnetron sputtering of Ag-0.2 atomic% Nd-1 atomic% Au in an Ar gas atmosphere to form a light reflecting layer with an average coating thickness of 120 nm. Thereafter, MgAl₂O₄ was formed in a thickness of 100 nm by vacuum deposition. By thereafter coating it with a straight silicone-based paint as a top coat layer, and baking and drying at 180°C × 30 minutes, a light reflector was obtained.

### Example 6

Fabrication was done in a similar manner as in Example 5, except that in the cresol novorak type epoxy-based paint spray-coated as the undercoat layer, spherical-shaped SiO₂ particles having an average particle size of 0.2 µm were dispersed, using a homogenizer, in an amount of 30 wt% based on solid content of the coating, whereby a light reflector was obtained.

### Example 7

Fabrication was done in a similar manner as in Example 5, except that to the cresol novorak type epoxy-based paint spray-coated as the undercoat layer, an elasticity reducing agent comprised of propylene glycol having a terminal modified with epoxy was added in an amount of 5 wt% based on a base resin, whereby a light reflector was obtained.

### Example 8

Fabrication was done in a similar manner as in Example 2, except that 0.5 weight part of a Ni-based cure accelerating agent was added to the undercoat layer, and baked and dried at 190°C × 60 minutes, whereby a light reflector was obtained.

### Example 9

Fabrication was done in a similar manner as in Example 2, except that 0.5 weight part of a Sn-based cure accelerating agent was added to the undercoat layer, and baked and dried at 190°C × 60 minutes, whereby a light reflector was obtained.

### Example 10

Fabrication was done in a similar manner as in Example 2, except that 10 weight parts of an acryl-modified silicone-based coating agent was added to the undercoat layer, and baked and dried at 190°C × 60 minutes, whereby a light reflector was obtained.

### Example 11

Fabrication was done in a similar manner as in Example 2, except that 5 weight parts of yellow reflective pearl mica pigments were added to the top coat layer, whereby a light reflector was obtained.

### Example 12

Fabrication was done in a similar manner as in Example 2, except that 1.0 weight part of a polydimethylsiloxane-based leveling agent was added to the undercoat layer, whereby a light reflector was obtained.

### Example 13

Fabrication was done in a similar manner as in Example 2, except that 5 weight parts of a melamine resin was added to the top coat layer, whereby a light reflector was obtained.

### Example 14

Fabrication was done in a similar manner as in Example 2, except that 10 weight parts of silica with a siloxane compound coated on the surface thereof was added to the top coat layer, whereby a light reflector was obtained.

### <Comparative Example 1>

A substrate having the shape of a reflector plate processed from an A1 material (A1050) by spin forming was delipidated and washed using an alkaline detergent. Thereafter, it was spray-coated with an amino-modified acryl paint. After baked and dried at 120°C × 45 minutes, it was subjected to DC magnetron sputtering of Ag (purity of 99.99%) in an Ar gas atmosphere to form a light reflecting layer with an average coating thickness of 120 nm. By thereafter coating it with an amino-modified acryl paint as a top coat layer, and baking and drying at 120°C × 30 minutes, a light reflector was obtained.

### <Comparative Example 2>

Fabrication was done in a similar manner as in Comparative Example 1, except that a silicone-modified acryl paint was used for the undercoat layer and the top coat layer, whereby a light reflector was obtained.

### <Comparative Example 3>

Fabrication was done in a similar manner as in Example 12, except that 1.5 weight parts of a polydimethylsiloxane-based leveling agent was added to the undercoat layer, whereby a light reflector was obtained.

### <Comparative Example 4>

Fabrication was done in a similar manner as in Example 13, except that 25 weight parts of a melamine resin was added to the top coat layer, whereby a light reflector was obtained.

### <Comparative Example 5>

Fabrication was done in a similar manner as in Example 14, except that 15 weight parts of silica with a siloxane compound coated on the surface thereof was added to the top coat layer, whereby a light reflector was obtained.

The thus fabricated samples were subjected to tests of reflectance, heat resistance, light resistance and corrosion resistance. The following describes test methods.

The reflectance was measured using a self-recording spectrophotometer U-4000 manufactured by Hitachi Limited, in which the reflectance of 555 nm was measured. For testing the heat resistance, the samples were left unattended in a hot air circulation chamber maintained at 160°C or 200°C, and the appearance changes, after 30 days, were observed. For testing the light resistance, a mercury lamp was irradiated in 140°C atmosphere, and the appearance changes, after 30 days, were observed. For testing the corrosion resistance, they were subjected to a salt spray test (salt concentration of 5%, 8 hours spray and 16 hours pause) for 3 cycles conforming to the salt spray test method of JIS Standard Z2371, and the appearance changes were observed after they were taken out.

Furthermore, for Example 12 to Example 14 and Comparative Example 3 to Comparative Example 5, the appearance observations and the adhesions were evaluated by visual observation.

The test results according to the above are shown in Table 5 to Table 8. In the test results of the heat resistance and the light resistance, "○" indicates that no tarnish, crack or the like is observed by visual evaluation, and that the reflectance at 555 nm decreases by less than 5%. Further, "Δ" indicates that tarnish, crack or the like is slightly observed by visual evaluation, or that the reflectance at 555 nm decreases by at least 5% and less than 10%, while "×" indicates that tarnish, crack or the like is clearly observed by visual evaluation, or that the reflectance at 555 nm decreases by at least 10%. In the test results of the corrosion resistance, "○" indicates that no peeling, corrosion or the like is observed, and "Δ" indicates that peeling or corrosion is partially observed e.g. on an end surface, while "×" indicates that peeling or corrosion is clearly observed.

Furthermore, in the test results of the adhesion, "○" indicates that no peeling is observed by visual evaluation, while "×" indicates that peeling is observed. Note that no appearance defect was observed in Example 12 to Example 14 and Comparative Example 3 to Comparative Example 5 (indicated by "○" in the tables).

It is apparent from Table 5 to Table 8 that all of Example 1 to Example 14, while maintaining high reflectances, showed superior resistances to Comparative Example 1 to Comparative Example 5 in the heat resistance, light resistance and corrosion resistance.

**Table 5**

| | Example 1 | Example 2 | Example 3 | Example 4 | Example 5 | Example 6 | Example 7 | Comparative Example 1 | Comparative Example 2 |
|---|---|---|---|---|---|---|---|---|---|
| Reflectance | 98% | 98% | 98% | 97% | 97% | 97% | 97% | 98% | 98% |
| Heat resistance 160°C × 30days | ○ | ○ | ○ | ○ | ○ | ○ | ○ | × | × |
| Heat resistance (2) 200°C × 30days | Δ | Δ | Δ | ○ | ○ | ○ | ○ | × | × |
| Light resistance 140°C mercury lamp × 30days | ○ | ○ | ○ | ○ | ○ | ○ | ○ | × | Δ |
| Corrosion resistance Salt spray test × 3days | ○ | ○ | ○ | ○ | ○ | ○ | ○ | × | × |

**Table 6**

| | Example 8 | Example 9 | Example 10 | Example 11 |
|---|---|---|---|---|
| Reflectance | 98% | 98% | 98% | 94% |
| Heat resistance (1) 160°C × 30days | ○ | ○ | ○ | ○ |
| Heat resistance (2) 200°C × 30days | Δ | Δ | Δ | Δ |
| Light resistance 140°C mercury lamp × 30days | ○ | ○ | ○ | ○ |
| Corrosion resistance Salt spray test × 3days | ○ | ○ | ○ | ○ |

**Table 7**

| | Example 12 | Example 13 | Example 14 |
|---|---|---|---|
| Appearance | ○ | ○ | ○ |
| Reflectance | 98% | 98% | 94% |
| Adhesion | ○ | ○ | ○ |
| Heat resistance (1) 160°C × 30days | ○ | ○ | ○ |
| Heat resistance (2) 200°C × 30days | Δ | Δ | Δ |
| Light resistance 140°C mercury lamp × 30days | ○ | ○ | ○ |
| Corrosion resistance Salt spray test × 3days | ○ | ○ | ○ |
| Corrosion resistance Salt spray test × 7days | ○ | ○ | ○ |

**Table 8**

| | Comparative Example 3 | Comparative Example 4 | Comparative Example 5 |
|---|---|---|---|
| Appearance | ○ | ○ | ○ |
| Reflectance | 98% | 98% | 90% |
| Adhesion | × | × | ○ |
| Heat resistance (1) 160°C × 30days | ○ | × | ○ |
| Heat resistance (2) 200°C × 30days | Δ | × | Δ |
| Light resistance 140°C mercury lamp × 30days | ○ | ○ | ○ |
| Corrosion resistance Salt spray test × 3days | ○ | Δ | ○ |
| Corrosion resistance Salt spray test × 7days | × | × | ○ |

## Claims

1. A light reflector (1) comprising: a substrate (2); a light reflecting layer (4) formed of Ag or an Ag-based alloy and formed on a surface of the substrate (2); and a top coat layer (5) formed to cover a surface of the light reflecting layer; an undercoat layer (3) is formed between the substrate (2) and the light reflecting layer (4),
wherein the top coat layer (5) is formed by coating a straight silicone-based coating agent containing a straight silicone resin as a main ingredient on the surface of the light reflecting layer (4);
and
the light reflecting layer (4) is an Ag-based alloy containing 0.1 to 1 atomic% of Nd or Y and containing 0.1 to 2 atomic% of Au or Cu, the undercoat layer (3) is made of a material other than the straight silicone-based coating agent, formed by selecting either one of an epoxy-modified silicone-based coating agent or a cresol novolac-type epoxy-based coating agent, and by coating it on the surface of the substrate (2).

2. The light reflector (1) according to claim 1, wherein the top coat layer (5) is a coating having 0.1 to 10 weight parts of a Ni compound-based cure accelerating agent added to 100 weight parts of a straight silicone base resin.

3. The light reflector (1) according to claim 1, wherein a top surface of the top coat layer (5) is a layer containing titanium dioxide having a photocatalytic function.

4. The light reflector (1) according to claim 1,
wherein the undercoat layer (3) is an organic coating containing fine inorganic particles in an amount of 10 to 70 wt% based on solid content of the coating.

5. The light reflector (1) according to claim 1,
wherein the undercoat layer (3) is an organic coating having 1 to 5 weight parts of an elasticity reducing agent added to 100 weight parts of a base resin.

6. The light reflector (1) according to claim 1, which, between the top coat layer (5) and the light reflecting layer (4), has an intermediate layer (7) formed of a composite oxide of Mg and Al.

7. The light reflector (1) according to claim 1,
wherein the undercoat layer (3) is a coating having at least 0.1 weight part of a Sn compound-based cure accelerating agent or a Ni compound-based cure accelerating agent added to 100 weight parts of an epoxy-modified silicone-based coating agent or a cresol novolac-type epoxy-based coating agent.

8. The light reflector (1) according to claim 1,
wherein the undercoat layer (3) is a coating having at least 5 to 20 weight parts of an acryl-modified silicone-based coating agent added to 100 weight parts of an epoxy-modified silicone-based coating agent or a cresol novolac-type epoxy-based coating agent.

9. The light reflector (1) according to claim 1, wherein the top coat layer (4) is formed of the straight silicone-based coating agent having added thereto mica pigments (8) coated with titanium dioxide, in which the added amount of the mica pigments (8) is 5 to 20 weight parts to 100 weight parts of a straight silicone base resin.

10. The light reflector (1) according to claim 1,
wherein the undercoat layer (3) is a coating having 0.2 to 1.0 weight part of a polydimethylsiloxane(PDMS)-based leveling agent added to 100 weight parts of an epoxy-modified silicone-based coating agent or a cresol novolac-type epoxy-based coating agent.

11. The light reflector (1) according to claim 1, wherein the top coat layer (5) is a coating having 5 to 20 weight parts of a melamine resin added to 100 weight parts of a straight silicone base resin.

12. The light reflector (1) according to claim 1, wherein the top coat layer (5) is a coating having 2 to 10 weight parts of silica (SiO₂), with a siloxane compound coated on the surface thereof, added to 100 weight parts of a straight silicone base resin.

13. A lighting fixture having the light reflector (1) according to any of the claims 1 to 12 and a light source unit.

## Patentansprüche

1. Lichtreflektor (1), umfassend: ein Substrat (2); eine aus Ag oder einer Legierung auf Ag-Basis gebildete und auf einer Oberfläche des Substrats (2) gebildete lichtreflektierende Schicht (4); und eine zum Bedecken einer Oberfläche der lichtreflektierenden Schicht gebildete Deckschicht (5); wobei eine Untergrundschicht (3) zwischen dem Substrat (2) und der lichtreflektierenden Schicht (4) gebildet ist,
wobei die Deckschicht (5) gebildet wird, indem ein Beschichtungsmittel auf Reinsilikonbasis, das ein Reinsilikonharz als einen Hauptinhaltsstoff enthält, auf die Oberfläche der lichtreflektierenden Schicht (4) gestrichen wird; und
es sich bei der lichtreflektierenden Schicht (4) um eine Legierung auf Ag-Basis handelt, die 0,1 bis 1 Atom-% Nd oder Y enthält und 0,1 bis 2 Atom-% Au oder Cu enthält, und
die Untergrundschicht (3) aus einem anderen Material hergestellt ist als das auf Beschichtungsmittel auf Reinsilikonbasis, gebildet wird, indem entweder ein mit Epoxid modifiziertes Beschichtungsmittel auf Silikonbasis oder ein Kresol-Novolak-Beschichtungsmittel auf Epoxidbasis ausgewählt wird und auf die Oberfläche des Substrats (2) gestrichen wird.

2. Lichtreflektor (1) nach Anspruch 1, wobei es sich bei der Deckschicht (5) um eine Beschichtung handelt, die 0,1 bis 10 Gewichtsanteile eines Aushärtungs-Beschleunigungsmittels auf Ni-Verbindungsbasis, zugegeben zu 100 Gewichtsanteilen eines Harzes auf Reinsilikonbasis, aufweist. 8

3. Lichtreflektor (1) nach Anspruch 1, wobei es sich bei einer oberen Oberfläche der Deckschicht (5) um eine Schicht handelt, die Titandioxid mit einer photokatalytischen Funktion enthält.

4. Lichtreflektor (1) nach Anspruch 1,
wobei es sich bei der Untergrundschicht (3) um eine organische Beschichtung handelt, die feine anorganische Partikel in einer Menge von 10 bis 70 Gew.-%, basierend auf dem Feststoffgehalt der Beschichtung, enthält.

5. Lichtreflektor (1) nach Anspruch 1,
wobei es sich bei der Untergrundschicht (3) um eine organische Beschichtung handelt, die 1 bis 5 Gewichtsanteile eines elastizitätsmindernden Mittels, zugegeben zu 100 Gewichtsanteilen eines Grundharzes, aufweist.

6. Lichtreflektor (1) nach Anspruch 1, der zwischen der Deckschicht (5) und der lichtreflektierenden Schicht (4) eine aus einem Kompositoxid von Mg und Al gebildete Zwischenschicht (7) aufweist.

7. Lichtreflektor (1) nach Anspruch 1,
wobei es sich bei der Untergrundschicht (3) um eine Beschichtung handelt, die mindestens 0,1 Gewichtsanteile eines Aushärtungsbeschleunigungsmittels auf Sn-Verbindungsbasis oder eines Aushärtungsbeschleunigungsmittels auf Ni-Verbindungsbasis, zugegeben zu 100 Gewichtsanteilen eines mit Epoxid modifizierten Beschichtungsmittels auf Silikonbasis oder eines Kresol-Novolak-Beschichtungsmittels auf Epoxidbasis, aufweist.

8. Lichtreflektor (1) nach Anspruch 1,
wobei es sich bei der Untergrundschicht (3) um eine Beschichtung handelt, die mindestens 5 bis 20 Gewichtsanteile eines mit Acryl modifizierten Beschichtungsmittels auf Silikonbasis, zugegeben zu 100 Gewichtsanteilen eines mit Epoxid modifizierten Beschichtungsmittels auf Silikonbasis oder eines Kresol-Novolak-Beschichtungsmittels auf Epoxidbasis, aufweist.

9. Lichtreflektor (1) nach Anspruch 1, wobei die Deckschicht (4) aus dem Beschichtungsmittel auf Reinsilikonbasis gebildet ist, zu dem mit Titandioxid beschichtete Glimmerpigmente (8) zugegeben wurden, wobei die zugegebene Menge der Glimmerpigmente (8) 5 bis 20 Gewichtsanteile zu 100 Gewichtsanteilen eines Harzes auf Reinsilikon beträgt.

10. Lichtreflektor (1) nach Anspruch 1,
wobei es sich bei der Untergrundschicht (3) um eine Beschichtung handelt, die 0,2 bis 1,0 Gewichtsanteile eines Verlaufmittels auf Polydimethylsiloxan(PDMS)-Basis, zugegeben zu 100 Gewichtsanteilen eines mit Epoxid modifizierten Beschichtungsmittels auf Silikonbasis oder eines Kresol-Novolak-Beschichtungsmittels auf Epoxidbasis, aufweist.

11. Lichtreflektor (1) nach Anspruch 1, wobei es sich bei der Deckschicht (5) um eine Beschichtung handelt, die 5 bis 20 Gewichtsanteile eines Melaminharzes, zugegeben zu 100 Gewichtsanteilen eines Harzes auf Reinsilikonbasis, aufweist.

12. Lichtreflektor (1) nach Anspruch 1, wobei es sich bei der Deckschicht (5) um eine Beschichtung handelt, die 2 bis 10 Gewichtsanteile Siliziumdioxid (SiO₂) mit einer auf ihre Oberfläche gestrichenen Siloxanverbindung, zugegeben zu 100 Gewichtsanteilen eines Harzes auf Reinsilikonbasis zugegeben, aufweist.

13. Beleuchtungskörper, der den Lichtreflektor (1) nach einem der Ansprüche 1 bis 12 und eine Lichtquelleneinheit aufweist.

## Revendications

1. Réflecteur de lumière (1) comprenant : un substrat (2) ; une lumière réfléchissant la lumière (4) formée d'Ag ou d'un alliage à base d'Ag et formée sur une surface du substrat (2) ; et une couche protectrice supérieure (5) formée pour couvrir une surface de la couche réfléchissant la lumière ; une couche sous-jacente (3) est formée entre le substrat (2) et la couche réfléchissant la lumière (4),
où la couche protectrice supérieure (5) est formée par enduction d'un agent de revêtement à base de silicone droite contenant une résine de silicone droite comme ingrédient principal sur la surface de la couche réfléchissant la lumière (4) ; et
la couche réfléchissant la lumière (4) est un alliage à base d'Ag contenant 0,1 à 1% atomique de Nd ou Y et contenant 0,1 à 2% d'Au ou de Cu,
la couche sous-jacente (3) est constituée d'un matériau autre que l'agent de revêtement à base de silicone droite, formé en sélectionnant l'un ou l'autre d'un agent de revêtement à base de silicone modifiée par époxy ou un agent de revêtement à base époxy de type novolac crésol, et par enduction de celui-ci sur la surface du substrat (2).

2. Réflecteur de lumière (1) selon la revendication 1, où la couche protectrice supérieure (5) est un revêtement contenant 0,1 à 10 parties en poids d'un agent d'accélération de prise à base de composé Ni ajouté à 100 parties en poids d'une résine à base de silicone droite.

3. Réflecteur de lumière (1) selon la revendication 1, où une surface supérieure de la couche protectrice supérieure (5) est une couche contenant du dioxyde de titane ayant une fonction photocatalytique.

4. Réflecteur de lumière (1) selon la revendication 1,
où la couche sous-jacente (3) est un revêtement organique contenant de fines particules inorganiques dans une quantité 10 à 70% en poids sur la base de la teneur en solides du revêtement.

5. Réflecteur de lumière (1) selon la revendication 1,
où la couche sous-jacente (3) est une couche de revêtement contenant 1 à 5 parties en poids d'un agent réducteur d'élasticité ajouté à 100 parties en poids d'une résine de base.

6. Réflecteur de lumière (1) selon la revendication 1, qui présente, entre la couche protectrice supérieure (5) et la couche réfléchissant la lumière (4), une couche intermédiaire (7) formée d'un oxyde de composite de Mg et d'Al.

7. Réflecteur de lumière (1) selon la revendication 1,
où la couche sous-jacente (3) est un revêtement présentant au moins 0,1 partie en poids d'un agent d'accélération de prise à base de composé Sn ou d'un agent d'accélération de prise à base de composé Ni ajouté à 100 parties en poids d'un agent de revêtement à base de silicone modifiée par époxy ou d'un agent de revêtement à base époxy de type novolac crésol.

8. Réflecteur de lumière (1) selon la revendication 1,
où la couche sous-jacente (3) est un revêtement présentant au moins 5 à 20 parties en poids d'un agent de revêtement à base de silicone modifiée d'acryle ajouté à 100 parties en poids d'un agent de revêtement à base de silicone modifiée par époxy ou d'un agent de revêtement à base époxy de type novolac crésol.

9. Réflecteur de lumière (1) selon la revendication 1, où la couche protectrice supérieure (4) est formée de l'agent de revêtement à base de silicone droite auquel on a ajouté des pigments de mica (8) enduits de dioxyde de titane, dans lequel la quantité ajoutée des pigments de mica (8) est de 5 à 20 parties en poids à 100 parties en poids d'une résine à base de silicone droite.

10. Réflecteur de lumière (1) selon la revendication 1, où la couche sous-jacente (3) est un revêtement présentant 0,2 à 1,0 partie en poids d'un agent de nivellement à base de polydiméthylsiloxane (PDMS) ajouté à 100 parties en poids d'un agent de revêtement à base de silicone modifiée par époxy ou d'un agent de revêtement à base époxy de type novolac crésol.

11. Réflecteur de lumière (1) selon la revendication 1, où la couche protectrice supérieure (5) est un revêtement contenant 5 à 20 parties en poids d'une résine de mélamine ajoutée à 100 parties en poids d'une résine à base de silicone droite.

12. Réflecteur de lumière (1) selon la revendication 1, où la couche protectrice supérieure (5) est un revêtement contenant 2 à 10 parties de silice (SiO₂), avec un composé de siloxane enduit à la surface de celle-ci, ajouté à 100 parties en poids d'une résine à base de silicone droite.

13. Appareil d'éclairage présentant le réflecteur de lumière (1) selon l'une quelconque des revendications 1 à 12 et une unité de source de lumière.
